# EUROPEAN PATENT APPLICATION

(11) **EP 4 790 800 A1**
(43) Date of publication of application: **12.08.2026**
(21) Application number: 24898052.6
(22) Date of filing: 25.11.2024
(51) Int. Cl.: H01M 50/103, H01M 50/342, H01M 50/502, H01M 50/627, H01M 50/126, B32B 15/08, B32B 15/085

(54) **SECONDARY BATTERY AND MANUFACTURING METHOD THEREFOR**

(30) Priority: 28.11.2023 KR 20230167377
(71) Applicant: LG Energy Solution, Ltd., Seoul 07335 (KR)
(72) Inventor: HWANG, Won Pill, Daejeon 34122 (KR); LEE, Jin Kyu, Daejeon 34122 (KR); KANG, Ye Ran, Daejeon 34122 (KR); PARK, Jun Kyu, Daejeon 34122 (KR); YOON, Doo Han, Daejeon 34122 (KR); KIM, Sun Jae, Daejeon 34122 (KR)
(74) Representative: Plasseraud IP
(86) International application number: PCT/KR2024/018753
(87) International publication number: WO 2025/116458

(57) **Abstract**

A secondary battery includes a stack-type electrode assembly in which a plurality of unit batteries are stacked in a first direction, the stack-type electrode assembly having electrode leads at each end thereof in a second direction perpendicular to the first direction, a multifunctional terminal block located at each end of the stack-type electrode assembly, and a laminate sheet surrounding side surfaces of the stack-type electrode assembly. The multifunctional terminal block includes a fused resin layer having a locally increased thickness on a side surface thereof.

## Description

### [Technical Field]

The present disclosure relates to a secondary battery and a method of manufacturing the same, and more particularly to a secondary battery with improved safety and excellent productivity and a method of manufacturing the same.

This application claims the benefit of priority from Korean Patent Application No. 10-2023-0167377 filed on November 28, 2023, and all of the contents of the Korean Patent Application No. 10-2023-0167377 are incorporated by reference into this disclosure.

### [Background]

Unlike primary batteries, secondary batteries can be charged and discharged many times. Secondary batteries are widely used as an energy source for various wireless devices such as handsets, laptops, and wireless vacuum cleaners. Recently, as the manufacturing cost per unit capacity of secondary batteries has decreased dramatically because of improved energy density and economies of scale, and as the cruising distance of battery electric vehicles (BEVs) has increased to an equivalent level to that of fuel vehicles, the major use of secondary batteries has shifted from mobile devices to mobility.

As secondary batteries are being used in mobility applications, the demand for safety of secondary batteries is increasing. In the event of accidents such as fires in secondary batteries used in mobility, the driver's life could be endangered; therefore, research on technologies to enhance the safety of secondary batteries is essential.

### [Summary]

### [Technical Problem]

The first technical problem to be solved by the present disclosure is to provide a secondary battery with improved safety and excellent productivity.

The second technical problem to be solved by the present disclosure is to provide a method of manufacturing a secondary battery with improved safety and excellent productivity.

### [Technical Solution]

To solve the first technical problem, the present disclosure provides a secondary battery including: a stack-type electrode assembly in which a plurality of unit batteries is stacked in a first direction and having electrode leads at both ends in a second direction perpendicular to the first direction; multifunctional terminal blocks (MTBs) provided at both ends of the stack-type electrode assembly; and a laminate sheet surrounding the side surfaces of the stack-type electrode assembly, wherein the MTB includes a fused resin layer on a side surface, the fused resin layer having a locally increased thickness.

In some aspects, a combination part of the laminate sheet may be positioned at a location where the fused resin layer has a locally increased thickness.

In some aspects, the fused resin layer is a polymer film, and locations where the fused resin layer has a locally increased thickness may have an increased thickness due to a greater number of coatings of the polymer film compared to other locations.

In some aspects, the fused resin layer may include an extension part extending along a side surface of the MTB from an edge of the laminate sheet.

In some aspects, the thickness of the fused resin layer at locations having the locally increased thickness in the extension part may be from about 1.8 times to about 2.2 times the thickness of the fused resin layer at other locations in the extension part.

In some aspects, the combination part may be located in a substantially center part of the secondary battery in the first direction.

In some aspects, the fused resin layer is a polymer ring fused to a perimeter of the MTB housing of the MTB, and the location where the fused resin layer has a locally increased thickness may be a portion where tension is applied to the polymer ring when the polymer ring is fused to a perimeter of the MTB housing.

In some aspects, the fused resin layer may extend at least partially between the combination parts.

In some aspects, the length of the fused resin layer extending between the combination parts may be from about 0.1 mm to about 2 mm.

To solve the second technical problem, the present disclosure provides a method of manufacturing a secondary battery, including: coupling multifunctional terminal blocks (MTBs) to both ends of a stack-type electrode assembly that includes a plurality of unit batteries stacked in a first direction and having electrode leads at both ends in a second direction perpendicular to the first direction; forming a fused resin layer on a perimeter of the MTB housing of the MTB; and bonding the laminate sheet to the fused resin layer to surround the side surfaces of the stack-type electrode assembly, wherein the fused resin layer has a locally increased thickness, and the laminate sheet has a combination part at a location where the fused resin layer has a locally increased thickness.

In some aspects, the step of forming the fused resin layer may include a step of locally forming an overlapping layer of polymer films.

In some aspects, the polymer film may be configured to surround the side surface of the MTB housing and overlap locally.

In some aspects, the step of forming the fused resin layer may include: providing a polymer ring having an inner length longer than the length of the outer circumferential surface of the MTB housing on a perimeter of the MTB housing; fusing the polymer ring on the side surface of the MTB housing from one side of the MTB housing; and mutually fusing the remaining length of the polymer ring.

In some aspects, a location where the polymer ring is mutually fused in the step of mutually fusing the remaining length of the polymer ring may substantially coincide with a location where the laminate sheet has a combination part.

In some aspects, an electrode terminal part electrically connected to the electrode leads of the stack-type electrode assembly; and a busbar electrically connecting the electrode leads of the stack-type electrode assembly and the electrode terminal part are provided in the MTB housing, and the laminate sheet includes: a metal layer having flexibility; an inner resin layer provided on one side of the metal layer; and an outer resin layer provided on the other side of the metal layer, and the inner resin layer may include casted polypropylene (CPP).

### [Advantageous Effects]

The secondary battery of the present disclosure can have improved safety due to its excellent sealing reliability and can have enhanced productivity because it is easy to manufacture.

However, the technical effects that can be obtained in exemplary aspects of the present disclosure are not limited to the above-described effects, and other effects not mentioned can be clearly understood by a person skilled in the art from the description of the disclosure described below. In other words, unintended effects of implementing the exemplary aspects of the present disclosure may also be derived from the exemplary aspects of the present disclosure by a person skilled in the art.

### [Brief Description of the Drawings]

FIG. 1 is a perspective view illustrating a part of a secondary battery according to one aspect of the present disclosure.
FIG. 2 is a partial perspective view illustrating an enlarged portion of the secondary battery of FIG. 1.
FIG. 3 is a schematic perspective view illustrating the secondary battery of FIG. 1 with the laminate sheet removed.
FIG. 4 is a side view illustrating a secondary battery according to one aspect of the present disclosure viewed in the second direction.
FIG. 5 is an enlarged view of the portion indicated by P in FIG. 4.
FIG. 6 is a side view illustrating a secondary battery according to another aspect of the present disclosure viewed in the second direction.
FIG. 7 is a partial exploded perspective view illustrating a coupling method of laminate sheets of a secondary battery according to one aspect of the present disclosure.
FIG. 8 is a partial cross-sectional view of a laminate sheet according to one aspect of the present disclosure.
FIG. 9 is a schematic view illustrating an important part of an extension part exposed from the edge of the laminate sheet.
FIG. 10 is a cross-sectional view illustrating an important part of a cross-section of the first MTB and the laminate sheet cut along the line X-X' of FIG. 7.
FIG. 11 is a partial exploded perspective view illustrating a coupling method of a laminate sheet of a secondary battery according to another aspect of the present disclosure.
FIG. 12 is a flow chart illustrating a method of manufacturing a secondary battery according to one aspect of the present disclosure.
FIGS. 13, 14, and 19 are perspective or side views illustrating a method of manufacturing a secondary battery according to one aspect of the present disclosure.
FIGS. 15 to 17 are diagrams illustrating one aspect of a method of forming a fused resin layer.
FIG. 18 is a diagram illustrating another aspect of a method of forming a fused resin layer.
FIG. 20 is a schematic perspective view of a battery pack according to one aspect of the present disclosure.
FIG. 21 is an exploded perspective view schematically illustrating the configuration of the battery pack of FIG. 20.
FIG. 22 is a perspective view illustrating the battery cells of FIG. 21 seated in a pack housing.

### [Detailed Description]

Hereinafter, preferred aspects of the present disclosure concept will be described in detail with reference to the accompanying drawings. However, aspects of the present disclosure concept may be modified in various different forms, and it should not be interpreted that the scope of the present disclosure concept is limited by the aspects described below. It is preferred that the aspects of the present disclosure be interpreted as provided to explain the present disclosure more fully to a person skilled in the art. Herein, the same reference numerals refer to the same elements. In addition, the various elements and areas of the drawings are schematically illustrated. Accordingly, the present disclosure is not limited by the relative sizes or spacing illustrated in the accompanying drawings.

Terms such as first, second, and the like may be used to describe various components, but the components are not limited by the terms. The terms are used only for the purpose of distinguishing one component from the other component. For example, a first component may be named a second component, and vice versa, a second component may be named a first component, without departing from the scope of the present disclosure concept.

The terms used in the present description are used merely to explain specific aspects and are not intended to limit the present disclosure concept. Expressions in the singular include the plural unless the context clearly indicates otherwise. The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

Unless otherwise defined, all terms used herein, including technical terms and scientific terms, shall have the same meaning as commonly understood by a person skilled in the art of the technical field to which the present disclosure concept belongs. In addition, it will be understood that terms such as commonly used, dictionary-defined terms are to be construed to have a meaning consistent with the meaning they have in the context of the technology to which they relate and are not to be construed in an excessively formal sense unless explicitly defined herein.

Specific process sequences may be performed differently from the order described when some aspects are otherwise implementable. For example, two processes described in succession may be performed substantially simultaneously or may be performed in an order opposite to the order described.

In the accompanying drawings, for example, variations of the depicted forms may be expected, depending on manufacturing technology and/or tolerances. Accordingly, aspects of the present disclosure should not be construed as limited to the specific forms of the areas shown herein, and should include, for example, variations in form resulting from manufacturing processes. All terms "and/or" used herein are included each and every combination of one or more of the components mentioned. In addition, the term "substrate" as used herein may refer to the substrate itself, or to a stacked structure including the substrate and any predetermined layers or films, etc. formed on the surface thereof. In addition, the term "surface of the substrate" as used herein may refer to the exposed surface of the substrate itself, or to the outer surface of a predetermined layer or film, etc. formed on the substrate.

### (first aspect)

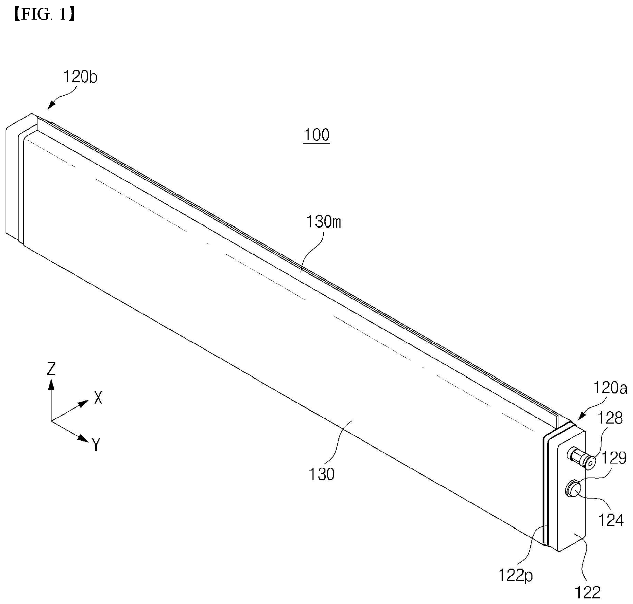

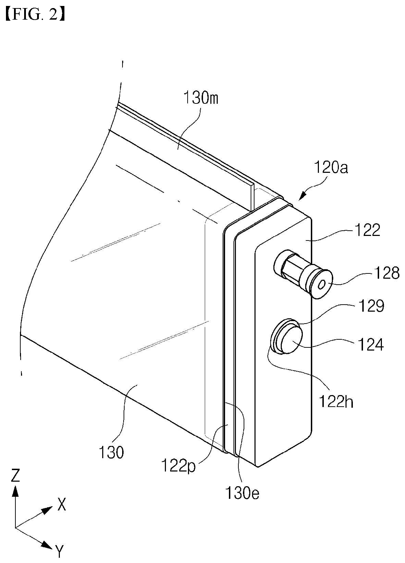

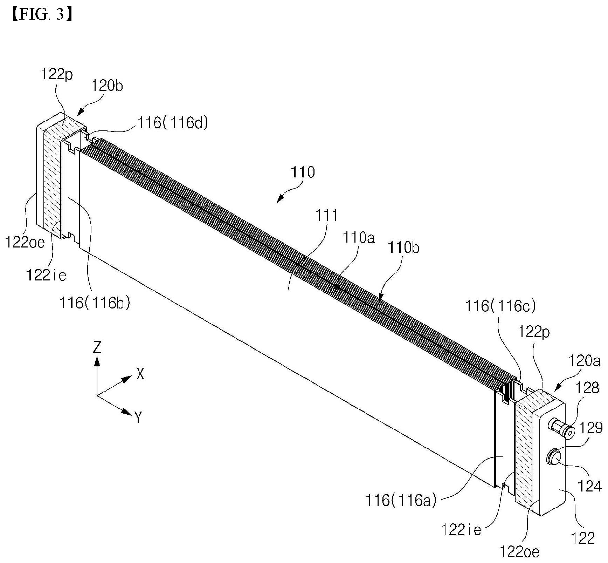

FIG. 1 is a perspective view illustrating an important part of a secondary battery 100 according to one aspect of the present disclosure. FIG. 2 is a partial perspective view illustrating an enlarged portion of the secondary battery 100 of FIG. 1. FIG. 3 is a schematic perspective view illustrating the removal of a laminate sheet 130 from the secondary battery 100 of FIG. 1.

In the following drawings, the secondary battery 100 is illustrated as being defined in a vertical coordinate system defined by the first direction along the X-axis, the second direction along the Y-axis, and the third direction along the Z-axis, which are perpendicular to each other. However, the first direction, second direction, and third direction only need to be relatively perpendicular to each other and are not specifically limited.

Referring to FIGS. 1 to 3, the secondary battery 100 includes a stack-type electrode assembly 110, multifunctional terminal blocks (MTB) 120a, 120b, and a laminate sheet 130.

The stack-type electrode assembly 110 may include a plurality of unit batteries 111 stacked in a first direction (for example, X-axis direction). Each of the unit batteries 111 may have electrode material coated on a metal foil that acts as a current collector.

Each unit battery 111 may have a thin plate-shaped body extending in a second direction (for example, Y-axis direction). Each unit battery 111 may be either a positive electrode unit battery or a negative electrode unit battery. In some aspects, the plurality of unit batteries 111 may be alternately stacked with one positive electrode unit battery and one negative electrode unit battery. The positive electrode unit battery and the negative electrode unit battery may be separated from each other by a separator.

In some other aspects, the plurality of unit batteries 111 may be alternately stacked with a plurality of positive electrode unit batteries and a plurality of negative electrode unit batteries. The plurality of positive electrode unit batteries and the plurality of negative electrode unit batteries may be separated from each other by a separator.

In some other aspects, the plurality of unit batteries 111 may be alternately stacked with a plurality of positive electrode unit batteries and a plurality of negative electrode unit batteries. The plurality of positive electrode unit batteries and the plurality of negative electrode unit batteries may be separated from each other by a separator.

The stack-type electrode assembly 110 may have electrode leads 116 at both ends in the second direction (for example, Y-axis direction). The electrode leads 116 may be electrically connected to electrode tabs of the plurality of unit batteries 111. One or more electrode tabs may be connected to one electrode lead 116. In some aspects, two or more electrode tabs may be connected to one electrode lead 116.

The stack-type electrode assembly 110 may include a first electrode stack 110a stacked in the first direction (for example, X-axis direction) while sharing one electrode lead 116, and a second electrode stack 110b stacked in the first direction (for example, X-axis direction) while sharing another electrode lead 116.

In some aspects, the stack-type electrode assembly 110 may have two electrode leads 116 on one side and two electrode leads 116 on the other side. In this case, the first electrode stack 110a included in the stack-type electrode assembly 110 may have a first electrode lead 116a on one side and a second electrode lead 116b on the other side. Also, the second electrode stack 110b included in the stack-type electrode assembly 110 may have a third electrode lead 116c on one side and a fourth electrode lead 116d on the other side. However, the present disclosure is not limited thereto.

A first MTB 120a may be provided at one end of the stack-type electrode assembly 110 in the second direction (for example, Y-axis direction) and a second MTB 120b may be provided at the other end. One of the first MTB 120a and the second MTB 120b may be electrically connected to the positive electrode side of the stack-type electrode assembly 110, and the other may be electrically connected to the negative electrode side of the stack-type electrode assembly 110. The second MTB 120b may have substantially the same configuration as the first MTB 120a, differing only in polarity. The first MTB 120a will be described below, but a person skilled in the art will be able to understand the configuration of the second MTB 120b from this description.

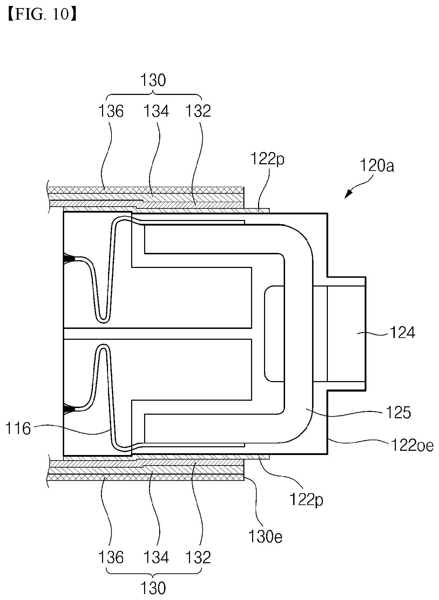

In some aspects, the first MTB 120a may include an MTB housing 122, an electrode terminal part 124 accommodated in the MTB housing 122, and a busbar 125 (refer to FIG. 10) that electrically connects the electrode terminal part 124 and the electrode leads 116.

The MTB housing 122 may include a material with relatively high rigidity, such as metal, and defines the external appearance of the first MTB 120a. In some aspects, the MTB housing 122 may be made of aluminum (Al), nickel (Ni), iron (Fe), cobalt (Co), chromium (Cr), manganese (Mn), or an alloy containing one or more of these.

The MTB housing 122 may include a through-hole 122h that exposes the electrode terminal part 124, which will be described later. The through-hole 122h may be provided in the MTB housing 122 so that the electrode terminal part 124 is exposed toward the second direction (for example, Y-axis direction). Therefore, the through-hole 122h may be provided on a plane perpendicular to the second direction (for example, Y-axis direction) of the MTB housing 122. Also, the through-hole 122h may have an opening that is open in the longitudinal direction of the electrode assembly 110. The shape of the through-hole 122h may be configured to conform to the outer shape of the portion of the electrode terminal part 124 that is exposed to the outside.

In some aspects, the exposed surface of the electrode terminal part 124 that is exposed to the outside from the MTB housing 122 may be a plane. In some aspects, the exposed surface may have a plane extending perpendicular to the second direction (for example, Y-axis direction). In some aspects, the electrode terminal part 124 may be exposed to the outside with a disk-shaped free surface.

In some aspects, an electrically insulating gasket 129 may be provided between the electrode terminal part 124 and the MTB housing 122 such that the electrode terminal part 124 is electrically insulated from the MTB housing 122.

In some aspects, the first MTB 120a may include a rupture disk configured to discharge gas that causes excessive increase in internal pressure by rupturing when the internal pressure of the secondary battery 100 increases excessively. The rupture disk does not restore to its original state once it ruptures due to a thermal event occurring inside the secondary battery 100. The rupture disk may be any rupture disk known in the art and is not specifically limited.

In some aspects, the MTB housing 122 may further include a fused resin layer 122p on a side surface.

The fused resin layer 122p is a layer of thermoplastic resin, for example, which may contain one or more of polyolefin resin, polyester resin, polyamide resin, polyvinyl chloride, polyvinylidene chloride, polystyrene, polyacrylonitrile, polyurethane, polycarbonate, polyacetal, polyacrylate, and modified polyvinyl alcohol resin.

The polyolefin resin may include, for example, polyethylene, polypropylene, poly(1-butene), poly(4-methyl-1-pentene), ethylene-propylene copolymer, copolymer of ethylene and α-olefin having 4 or more carbon atoms, copolymer of polyolefin and maleic anhydride, ethylene-vinyl ester copolymer, ethylene-acrylic acid ester copolymer, or modified polyolefin modified by grafting these with unsaturated carboxylic acid or its derivatives, but the present disclosure is not limited thereto.

In some aspects, the polyester resin may include polyethylene terephthalate, polybutylene terephthalate, or polyethylene naphthalate, but the present disclosure is not limited thereto.

In some aspects, the polyamide resin may include nylon 6, nylon 6·6, nylon 6/66 copolymer, nylon 11, nylon 12, or poly(m-xylene adipamide), but the present disclosure is not limited thereto.

In some aspects, the fused resin layer 122p may be casted, or may be stretched or rolled in uniaxial or biaxial directions.

In some aspects, the fused resin layer 122p may at least partially coat the side surface of the MTB housing 122. In some aspects, the fused resin layer 122p may extend from the inner end 122ie of the side of the MTB housing 122 or its vicinity toward the outer end 122oe of the side of the MTB housing 122. Here, the inner end 122ie refers to the end adjacent to the electrode leads 116. In some aspects, the fused resin layer 122p may surround the side surface of the MTB housing 122 with a predetermined width between the inner end 122ie and the outer end 122oe. In some aspects, the fused resin layer 122p may extend along the side surface of the MTB housing 122 with a predetermined width between the inner end 122ie and the outer end 122oe.

In some aspects, the fused resin layer 122p may surround the side surface of the MTB housing 122 with a constant width between the inner end 122ie and the outer end 122oe. In some aspects, the fused resin layer 122p may extend in the first direction (for example, X-axis direction) and/or the third direction (for example, Z-axis direction) with a constant width between the inner end 122ie and the outer end 122oe.

In some aspects, the fused resin layer 122p may extend along the side surface of the MTB housing 122 with a constant width between the inner end 122ie and the outer end 122oe.

In some aspects, the fused resin layer 122p may coat the entire side surface of the MTB housing 122.

The fused resin layer 122p may have a thickness of, for example, approximately 20 µm to approximately 400 µm. In some aspects, the fused resin layer 122p may have a thickness of approximately 20 µm to approximately 400 µm, approximately 30 µm to approximately 380 µm, approximately 40 µm to approximately 360 µm, approximately 50 µm to approximately 340 µm, approximately 60 µm to approximately 320 µm, approximately 70 µm to approximately 300 µm, approximately 80 µm to approximately 280 µm, approximately 90 µm to approximately 260 µm, approximately 100 µm to approximately 240 µm, approximately 110 µm to approximately 220 µm, approximately 120 µm to approximately 200 µm, approximately 130 µm to approximately 180 µm, approximately 140 µm to approximately 160 µm, or a range between any two of these values.

If the thickness of the fused resin layer 122p is too thin, mechanical strength may be insufficient. If the thickness of the fused resin layer 122p is too thick, it may be economically disadvantageous.

The fused resin layer 122p may be fused with the laminate sheet 130. In some aspects, the fused resin layer 122p may extend from the edge part 130e of the laminate sheet 130. In some aspects, the fused resin layer 122p may be exposed from the edge part 130e of the laminate sheet 130 and extend toward the outer end 122oe.

In some aspects, the first MTB 120a may further include a check valve 128. The check valve 128 may be configured to open to discharge internal gas when the internal pressure of the secondary battery 100 becomes higher than a predetermined pressure, and to close again when the internal pressure is relieved as the gas is discharged. The check valve 128 has no part that ruptures due to the discharge of the gas and can be restored to its original state after discharging the internal gas.

The secondary battery 100 further includes an electrolyte. The electrolyte may be an electrolyte commonly used for lithium secondary batteries and is not specifically limited. In some aspects, the electrolyte may be injected just before sealing the laminate sheet 130. In some aspects, the electrolyte may be injected through an electrolyte injection port provided in the first MTB 120a after sealing the laminate sheet 130.

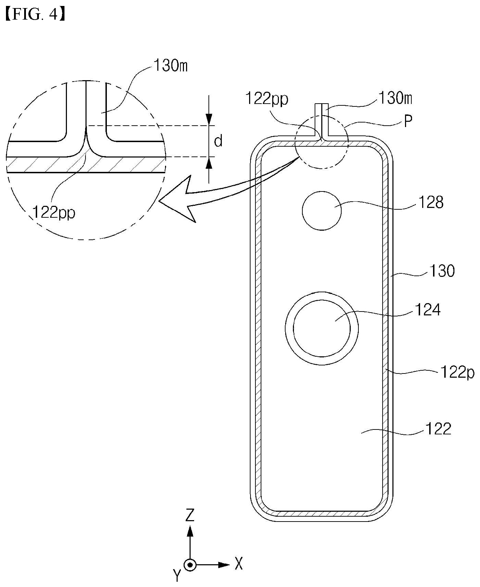

FIG. 4 is a side view illustrating a secondary battery 100 according to one aspect of the present disclosure viewed in the second direction (for example, Y-axis direction).

Referring to FIG. 4, a fused resin layer 122p may be provided between the MTB housing 122 and the laminate sheet 130 surrounding the MTB housing 122. The fused resin layer 122p may have a locally increased thickness. In FIG. 4, the fused resin layer 122p is shown to have a locally increased thickness on the upper surface of the MTB housing 122, but the present disclosure is not limited thereto.

In some aspects, the fused resin layer 122p may have a protrusion part 122pp at a location where it has a locally increased thickness. The protrusion part 122pp may be positioned adjacent to the combination part 130m where the laminate sheet 130 is combined. A defect may occur where a gap is created due to insufficient bonding between the combination part 130m where the opposing laminate sheets 130 are combined and the MTB housing 122. Such a defect may cause problems such as electrolyte leakage or infiltration of external moisture.

However, in the secondary battery 100 of the present disclosure, defects where gaps occur can be effectively prevented by placing the protrusion part 122pp between the combination part 130m and the MTB housing 122, thereby preventing problems such as electrolyte leakage or infiltration of external moisture.

In some aspects, the combination part 130m may be located in a substantially center part of the secondary battery 100 in the first direction (for example, X-axis direction). In some other aspects, the combination part 130m may be located adjacent to the corner part of the MTB housing 122 shown in FIG. 4.

In some aspects, the fused resin layer 122p may extend at least partially between the laminate sheets 130 of the combination part 130m. The portion of the fused resin layer 122p extending between the laminate sheets 130 of the combination part 130m may be the protrusion part 122pp.

The length (d) of the protrusion part 122pp extending between the laminate sheets 130 may be from approximately 0.1 mm to approximately 2 mm. In some aspects, the extended length (d) may be from approximately 0.1 mm to approximately 2 mm, approximately 0.2 mm to approximately 1.9 mm, approximately 0.3 mm to approximately 1.8 mm, approximately 0.4 mm to approximately 1.7 mm, approximately 0.5 mm to approximately 1.6 mm, approximately 0.6 mm to approximately 1.5 mm, approximately 0.7 mm to approximately 1.4 mm, approximately 0.8 mm to approximately 1.3 mm, approximately 0.9 mm to approximately 1.2 mm, approximately 1 mm to approximately 1.1 mm, or a range between any two of these values.

When the extended length (d) of the protrusion part 122pp is too small or too large, the effect of preventing defects where gaps occur may be insufficient.

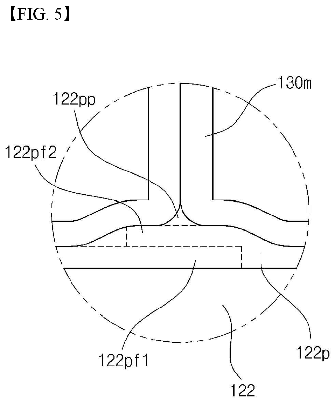

FIG. 5 is an enlarged view of the portion indicated by P in FIG. 4.

Referring to FIG. 5, the fused resin layer 122p may include an overlapping layer where two polymer films 122pf1, 122pf2 overlap adjacent to the combination part 130m. In some aspects, the overlapping polymer films 122pf1, 122pf2 may be both ends of a single polymer film constituting the fused resin layer 122p. That is, the polymer film may surround the MTB housing 122 and then its both ends may overlap on one surface of the MTB housing 122.

In FIG. 5, the polymer films 122pf1, 122pf2 are indicated by dotted lines, and depending on the case, an interface between the polymer films 122pf1, 122pf2 may be identifiable, or the interface between the polymer films 122pf1, 122pf2 may not be identifiable due to fusion. In some aspects, as shown in FIG. 5, the location where the fused resin layer 122p has a locally increased thickness (i.e., the protrusion part 122pp) may have an increased thickness due to a greater number of coatings of the polymer film compared to other locations. However, the present disclosure is not limited thereto.

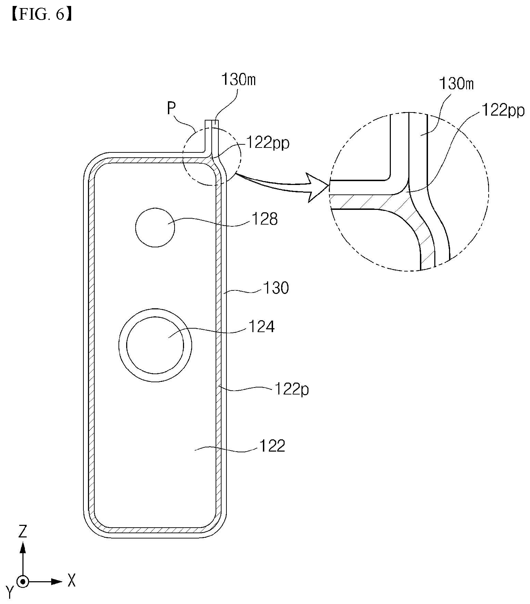

FIG. 6 is a side view illustrating a secondary battery 100 according to another aspect of the present disclosure viewed in the second direction (for example, Y-axis direction). While in the aspect described with reference to FIG. 4, the combination part 130m is located in the center part of the secondary battery 100 in the first direction (for example, X-axis direction), in the aspect of FIG. 6, the combination part 130m is located adjacent to the corner part of the MTB housing 122, which is the difference.

Referring to FIG. 6, the combination part 130m may be located close to any corner part of the MTB housing 122. In some aspects, the combination part 130m may be located close to one of the two corners among the four corners of the MTB housing 122 that are closer to the check valve 128. In some other aspects, the combination part 130m may be located close to one of the two corners among the four corners of the MTB housing 122 that are farther from the check valve 128.

The location of the protrusion part 122pp may be substantially identical to the location of the combination part 130m. Therefore, the protrusion part 122pp may be located close to any corner part of the MTB housing 122. In some aspects, the protrusion part 122pp may be located close to one of the two corners among the four corners of the MTB housing 122 that are closer to the check valve 128. In some other aspects, the protrusion part 122pp may be located close to one of the two corners among the four corners of the MTB housing 122 that are farther from the check valve 128.

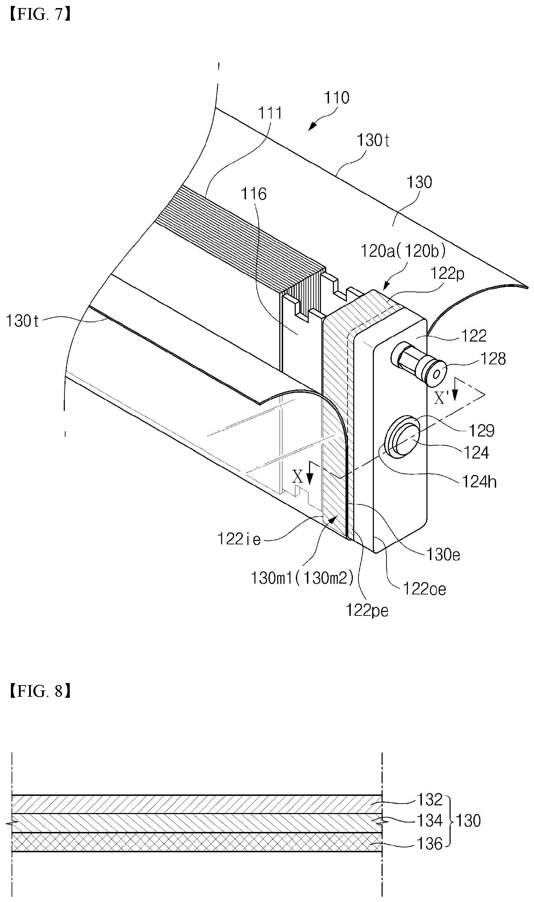

FIG. 7 is a partial exploded perspective view illustrating a coupling method of laminate sheets 130 of a secondary battery 100 according to one aspect of the present disclosure. FIG. 8 is a partial cross-sectional view of a laminate sheet 130 according to one aspect of the present disclosure.

Referring to FIGS. 7 and 8, the laminate sheet 130 may be configured to wrap around the side surface of the stack-type electrode assembly 110. In some aspects, the laminate sheet 130 may be attached to the side surface of the MTBs 120a, 120b to at least partially coat the side surface of the MTBs 120a, 120b. In some aspects, a parallel pair of edge parts 130e of the laminate sheet 130 may coat the entire side surfaces of the MTBs 120a, 120b that are parallel to the second direction (for example, Y-axis direction). In some other aspects, a parallel pair of edge parts 130e of the laminate sheet 130 may coat only a portion of the side surfaces of the MTBs 120a, 120b that are parallel to the second direction (for example, Y-axis direction).

The laminate sheet 130 may include a flexible metal layer 134, an inner resin layer 132 provided on one side of the metal layer 134, and an outer resin layer 136 provided on the other side of the metal layer 134.

The metal layer 134 can maintain an appropriate thickness, prevent the penetration of water vapor, oxygen, and other gases from the outside to the inside, and prevent leakage of the electrolyte. In some aspects, the metal layer 134 may include one or more selected from iron (Fe), carbon (C), chromium (Cr), manganese (Mn), nickel (Ni), aluminum (Al), and alloys thereof, but is not limited thereto. If the metal layer 134 is made of a material containing iron, the mechanical strength becomes stronger, and if it is made of aluminum, the flexibility improves, so aluminum metal foil is mainly used.

The metal layer 134 may be configured to be relatively easily deformed by external forces and to have an appropriate thickness and mechanical strength such that cracks or holes do not occur even with repeated deformation.

In some aspects, the metal layer 134 may have a thickness of approximately 20 micrometers (µm) to approximately 100 µm. In some aspects, the thickness of the metal layer 134 may be approximately 20 µm to approximately 100 µm, approximately 25 µm to approximately 95 µm, approximately 30 µm to approximately 90 µm, approximately 35 µm to approximately 85 µm, approximately 40 µm to approximately 80 µm, approximately 45 µm to approximately 75 µm, approximately 50 µm to approximately 70 µm, approximately 55 µm to approximately 60 µm, or a range between any two of these values.

The inner resin layer 132 provided on one side of the metal layer 134 may include a heat-adhesive layer. In some aspects, the inner resin layer 132 may include a polyolefin-based material that can perform sealing action through fusion. In some aspects, the inner resin layer 132 may include modified propylene such as casted polypropylene (CPP), or polypropylene-butylene-ethylene terpolymer.

The inner resin layer 132 may be formed by coating or laminating on one side of the metal layer 134.

The outer resin layer 136 provided on the other side of the metal layer 134 may act as a base substrate and protective layer for forming the laminate sheet 130. The outer resin layer 136 may include insulating materials such as polyethylene terephthalate (PET) or Nylon.

In some aspects, the inner resin layer 132 and the outer resin layer 136 may each have a thickness of approximately 10 micrometers (µm) to approximately 50 µm. In some aspects, the thickness of each of the inner resin layer 132 and the outer resin layer 136 may be approximately 10 µm to approximately 50 µm, approximately 12 µm to approximately 48 µm, approximately 15 µm to approximately 45 µm, approximately 17 µm to approximately 43 µm, approximately 20 µm to approximately 40 µm, approximately 22 µm to approximately 38 µm, approximately 25 µm to approximately 35 µm, approximately 27 µm to approximately 33 µm, or a range between any two of these values.

In some aspects, an adhesive resin layer may be further provided between the inner resin layer 132 and the metal layer 134 and/or between the outer resin layer 136 and the metal layer 134. The adhesive resin layer may be provided for smooth adhesion between heterogeneous materials. The adhesive resin layer may be formed in a single layer or a plurality of layers. In some aspects, the adhesive resin layer may include polyolefin resin, polyurethane resin, epoxy resin, or a mixture thereof.

In some aspects, the inner resin layer 132 may be fused to the fused resin layer 122p provided on the side surface of the MTBs 120a, 120b at both ends in the second direction (for example, Y-axis direction). As the inner resin layer 132 surrounds the side surface of the MTBs 120a, 120b and is fused to the fused resin layer 122p, the stack-type electrode assembly 110 may be encapsulated in the laminate sheet 130.

The inner resin layer 132 facing the first MTB 120a may form a first sealing part 130m1 by being melted by heating and then cooled while in contact with the fused resin layer 122p on the side surface of the first MTB 120a, thereby being fused to the side surface. The inner resin layer 132 facing the second MTB 120b may form a second sealing part 130m2 by being melted by heating and then cooled while in contact with the fused resin layer 122p on the side surface of the second MTB 120b, thereby being fused to the side surface.

The end parts 130t of the laminate sheet 130 surround the side surface of the MTBs 120a, 120b and the stack-type electrode assembly 110 and are fused together to form a combination part 130m (refer to FIG. 1). Specifically, the laminate sheet 130 may be pressed so that the inner resin layers 132 face each other at the combination part 130m, and then the facing inner resin layers 132 may be fused together.

The combination part 130m may be located on any one side of the stack-type electrode assembly 110. In some aspects, the combination part 130m may be located in the third direction (for example, Z-axis direction) of the stack-type electrode assembly 110 after surrounding the stack-type electrode assembly 110.

The fused resin layer 122p may include an extension part 122pe extending along the side surface of the MTB housing 122 from the edge 130e of the laminate sheet 130. The extension part 122pe may extend a predetermined length from the edge 130e of the laminate sheet 130 toward the outer end 122oe of the MTB housing 122.

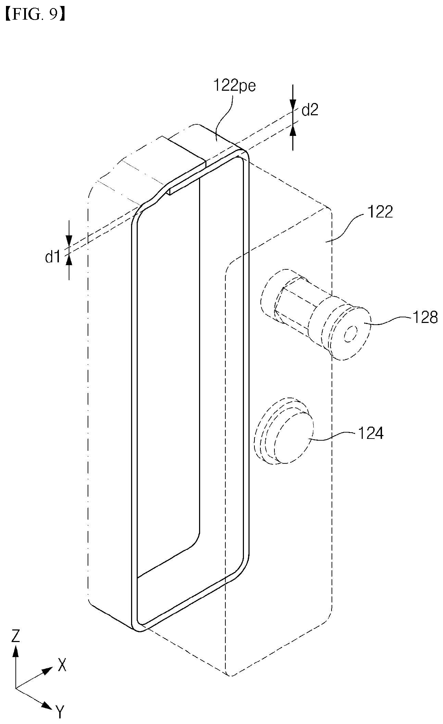

FIG. 9 is a schematic view showing an important part of an extension part 122pe exposed from an edge 130e of the laminate sheet 130.

Referring to FIG. 9, a thickness d2 of the fused resin layer 122P at a location having a locally increased thickness in the extension part 122PE is larger than a thickness d1 of the fused resin layer 122P at another location in the extension part 122PE. For example, the thickness D2 may be from approximately 1.8 times to approximately 2.2 times of the thickness D1.

Since the extension part 122pe is an externally exposed part of the laminate sheet 130, the laminate sheet 130 may be subjected to no or less heat impact when the laminate sheet 130 is fused to the MTB housing 122 with the fused resin layer 122p in between. Thus, in the extension part 122pe, an overlapping layer of polymer film may remain at a location having a locally increased thickness. In some cases, the overlapping layer of the polymer film may not be observed in the fused resin layer 122p fused between the laminate sheet 130 and the MTB housing 122.

FIG. 10 is a cross-sectional view illustrating an important part of a cross-section of the first MTB 120a and the laminate sheet 130 cut along the line X-X' of FIG. 7 according to one aspect of the present disclosure.

Referring to FIG. 10, a busbar 125 may be provided to make surface contact with the electrode terminal part 124. The busbar 125 may be composed of a metallic material having a low electrical resistance. In some aspects, the busbar 125 may be composed of copper (Cu), nickel (Ni), aluminum (Al), iron (Fe), cobalt (Co), platinum (Pt), molybdenum (Mo), tin (Sn), palladium (Pd), or an alloy containing one or more of these.

The busbar 125 may be configured to be in surface contact with the electrode leads 116 of the stack-type electrode assembly 110. In some aspects, the busbar 125 may be coupled to the electrode leads 116 by welding. In some aspects, the busbar 125 may be coupled with the electrode leads 116 by fasteners, such as rivets.

In some aspects, the busbar 125 may include a plane-shaped center part 125c extending horizontally in the first direction (e.g., X-axis direction) and an edge part 125e bending and extending from the center part 125c. The center part 125c may be configured to form a substantially U-shaped cross-sectional shape together with the edge part 125e and may extend in the third direction (e.g., in the Z-axis direction). In some aspects, the edge part 125e may have a plane extending perpendicular to the first direction (e.g., in the X-axis direction).

The busbar 125 may be in surface contact with the electrode terminal part 124 at the center part 125c. The busbar 125 may be in surface contact with the electrode leads 116 at the edge part 125e.

In some aspects, the electrode lead 116 may comprise a pre-bended portion that is bent at a portion not in contact with the busbar 125. The pre-bended portion may prevent stress from being concentrated in a particular portion of the electrode leads 116 by external forces applied to the stack-type electrode assembly 110, which may result in increased safety.

The laminate sheet 130 may be fused with the fused resin layer 122p. More specifically, an inner resin layer 132 of the laminate sheet 130 may be fused with the fused resin layer 122P.

In FIG. 10, an interface is shown to exist between the inner resin layer 132 and the fused resin layer 122p, but this is for ease of understanding only, and in practice, an interface may not be identified between the inner resin layer 132 and the fused resin layer 122p.

As described above, an extension part 122pe of the fused resin layer 122p may extend more or less from an edge 130e of the laminate sheet 130 toward an outer end 122oe of a side surface of the MTB housing 122.

### (second aspect)

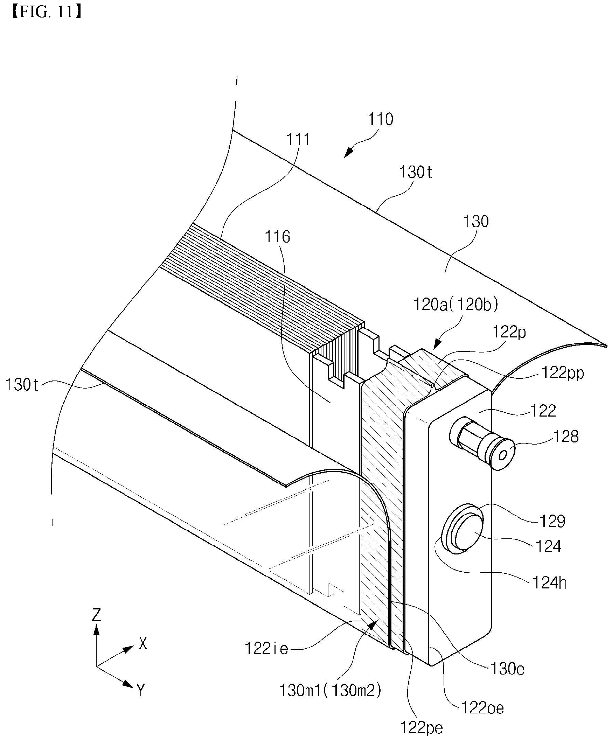

FIG. 11 is a partial exploded perspective view illustrating a coupling method of the laminate sheet 130 of the secondary battery 100 according to another aspect of the present disclosure.

Referring to FIG. 11, the fused resin layer 122p may have a protrusion part 122pp having a locally increased thickness. In some aspects, the protrusion part 122pp may protrude in a third direction (e.g., in the direction of the z-axis) by a length d as described with reference to FIG. 4.

In some aspects, the fused resin layer 122p may be a polymer ring provided on the perimeter of the MTB housing 122. Since the material of the polymer ring may be the same as the material of the fused resin layer 122p previously described with reference to FIGS. 1 to 3, further description is omitted herein.

The method of forming the protrusion part 122pp provided in the fused resin layer 122p will be described in more detail hereinafter. The protrusion part 122pp may be, for example, a part in which tension is applied to the polymer ring when fusing the polymer ring to form the fused resin layer 122p on the perimeter of the MTB housing 122.

### (third aspect)

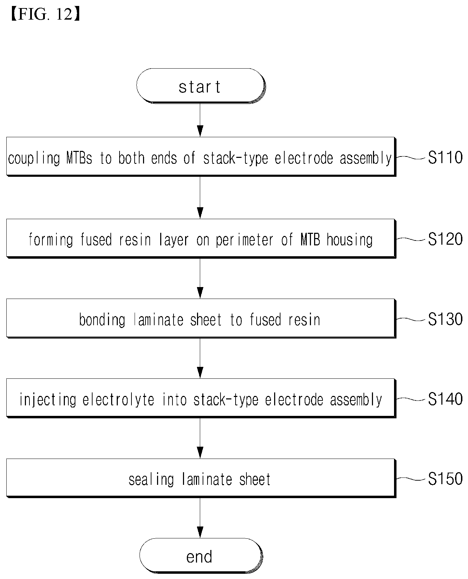

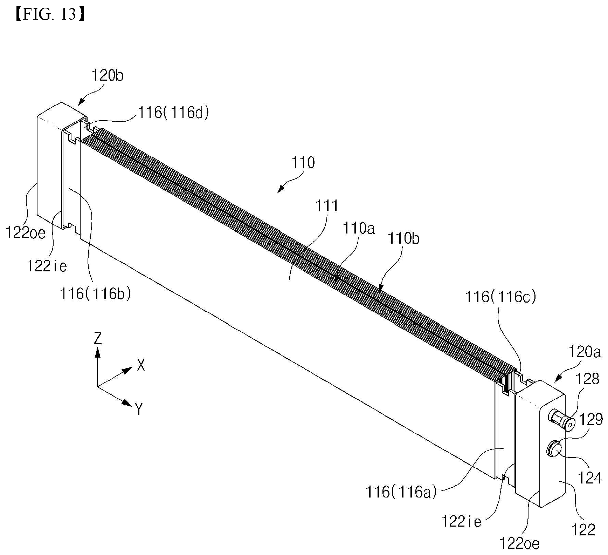

FIG. 12 is a flow diagram illustrating a method of manufacturing a secondary battery 100 according to one aspect of the present disclosure. FIGS. 13 to 19 are perspective views or side views illustrating a method of manufacturing a secondary battery 100 according to one aspect of the present disclosure.

Referring to FIGS. 12 and 13, MTBs 120a, 120b are coupled to both ends of a stack-type electrode assembly 110 including a plurality of unit batteries 111 stacked in a first direction (e.g., in the X-axis direction).

The stack-type electrode assembly 110 may have electrode leads at both ends in a second direction (e.g., in the Y-axis direction). This has been described with reference to FIG. 3 and will not be described in detail herein.

In some aspects, the MTBs 120a, 120b and the stack-type electrode assembly 110 may be coupled to each other by welding the electrode leads to the busbar of the MTB. The method of welding is not particularly limited, and any appropriate method known to a person skilled in the art may be utilized.

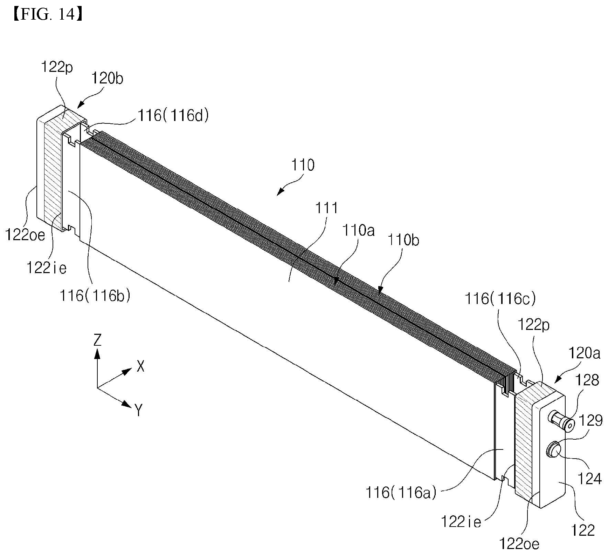

Referring to FIGS. 12 and 14, a fused resin layer 122p can be formed on the perimeter of the MTB housing 122 of the MTBs 120a, 120b.

In some aspects, the method of forming the fused resin layer 122p may include wrapping a polymer film around the perimeter of the MTB housing 122 as described with reference to FIGS. 5 and 9, but may partially wrap the side surfaces of the MTB housing 122 such that the polymer film overlaps. The portion where the polymer film is overlapped may have a locally increased thickness, and a laminate sheet may be fused to this portion, as described hereinafter.

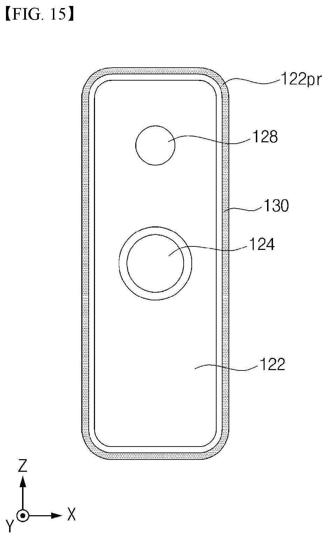

In some aspects, the method of forming the fused resin layer 122p may include providing a polymer ring on the perimeter of the MTB housing 122 to form a protrusion part thereof. FIGS. 15 through 17 are drawings illustrating one aspect of a method of forming the fused resin layer 122p.

Referring to FIG. 15, a polymer ring 122pr can be provided on the perimeter of the MTB housing 122. An inner length of the polymer ring 122pr is longer than a length of an outer circumferential surface of the MTB housing 122. Thus, the polymer ring 122pr may be easily provided on the perimeter of the MTB housing 122.

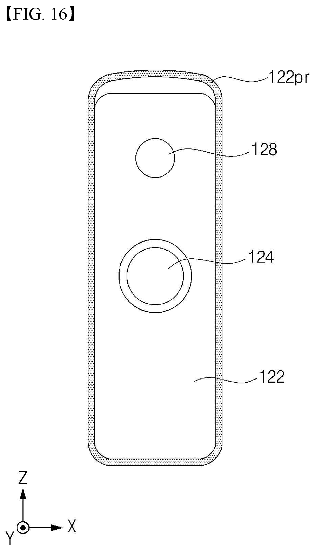

Referring now to FIG. 16, the polymer ring 122pr can be closely fitted from one side of the MTB housing 122. In FIG. 16, the polymer ring 122pr is shown adhered to starting from the lower part of the MTB housing 122 and extending to the side of the MTB housing 122. The present disclosure is not limited to this, however. In some aspects, the polymer ring 122pr may be fused adhered to the surface of the MTB housing 122.

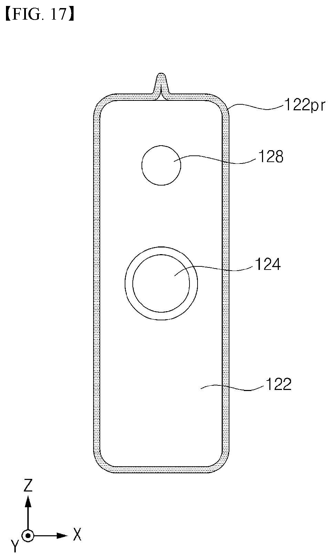

Referring to FIG. 17, a residual length of polymer ring 122pr is left on certain portions of the MTB housing 122. This is because the inner length of the polymer ring 122pr is longer than the length of the outer circumferential surface of the MTB housing 122. The remaining length portions of the polymer ring 122pr may be fused to each other by bringing the inner surfaces of the polymer ring 122pr opposite each other.

The mutually fused residual length portions of the polymer rings 122PR form a locally increased thickness of the fused resin layer 122P. The laminate resin 130 may be laminated at the portion where the residual length portions of the polymer rings 122PR are interfused. In some aspects, tension may be applied to the polymer ring 122pr as the polymer ring 122pr is adhered to along the surface of the MTB housing 122. In some aspects, the location where tension is applied to the polymer ring 122pr may be a portion of the remaining length of the polymer ring 122pr.

In some aspects, the residual length portion of the polymer ring 122pr may be located in a center part of the secondary battery 100 in the first direction (e.g., X-axis direction); in other words, the residual length portion of the polymer ring 122pr may be located in a central part of the MTB housing 122 in the first direction (e.g., X-axis direction).

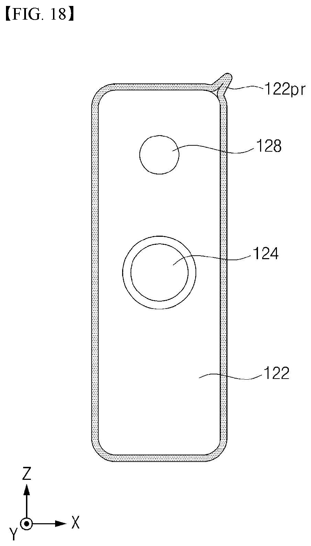

FIG. 18 is a diagram illustrating another aspect of a method for forming the fused resin layer 122p, which is performed subsequent to FIG. 16.

Referring to FIG. 18, the remaining length portion of the polymer ring 122pr may be positioned proximately to a corner of the MTB housing 122. A person skilled in the art will be able to dispose the residual length portion of the polymer ring 122pr as described with reference to FIG. 6.

While FIGS. 12 to 14 illustrate coupling MTBs 120 to both ends of stack-type electrode assembly 110 and then forming a fused resin layer 122p on the perimeter of MTB housing 122, the present disclosure is not limited thereto. In some other aspects, the MTBs 120 may be coupled to both ends of the stack-type electrode assembly 110 after forming the fused resin layer 122p on the perimeter of the MTB housing 122.

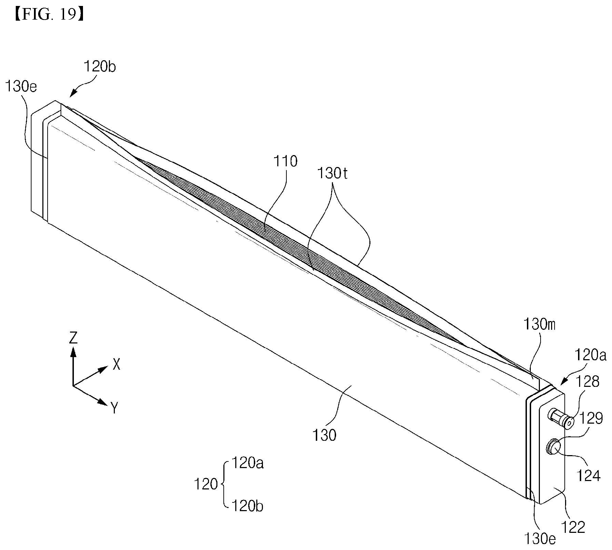

Referring to FIGS. 12 and 19, a laminate sheet 130 is bonded to the fused resin layer 122p to wrap around the sides of the stack-type electrode assembly 110.

The laminate sheet 130 may have a pair of substantially parallel edge parts 130e fused to the outer side surfaces of the MTBs 120. Meanwhile, a pair of substantially parallel end parts 130t connecting the pair of edge parts 130e of the laminate sheet 130 may have portions that are not fused to each other, and a portion of the stack-type electrode assembly 110 may be exposed between the pair of end parts 130t.

The combination part 130m where the pair of end parts 130t are fused may be positioned to neighbor a locally increased thickness portion of the fused resin layer 122p described above.

An electrolyte can then be supplied to the stack-type electrode assembly 110 through the non-fused portions of the pair of end parts 130t (S140).

In some aspects, the step of supplying the electrolyte may be performed after attaching the laminate sheet 130 to the MTBs 120. In some aspects, the step of supplying the electrolyte may be performed after sealing the laminate sheet. In this case, at least one of the MTBs 120 may comprise an electrolyte injection port.

The electrolyte may be any conventional electrolyte used for lithium secondary batteries, and is not particularly limited thereto.

In the case of supplying electrolyte to the stack-type electrode assembly 110 through the non-fused parts of the pair of end parts 130t, the laminate sheet 130 may be subsequently sealed (S150). Specifically, the laminate sheet 130 may be sealed by laminating end parts 130t of the laminate sheet 130 together. In some aspects, the end parts 130t may be laminated by applying heat after the inner resin layers 132 of the end parts 130t are brought into contact with each other. In other aspects, the end parts 130t may be laminated by applying heat after the inner resin layer 132 of one side end part 130t is brought into face-to-face contact with the outer resin layer 136 of the other side end part 130t.

### (fourth aspect)

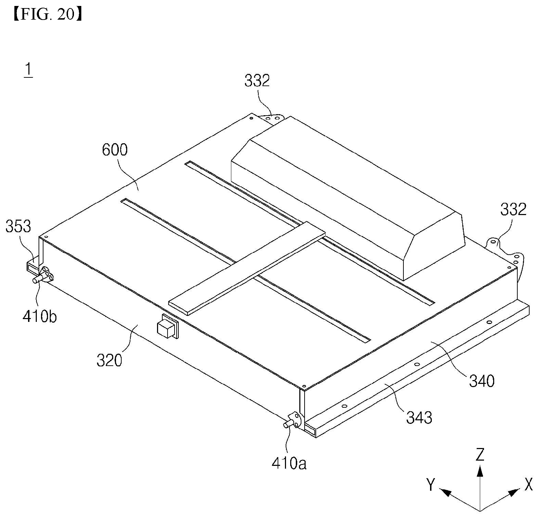

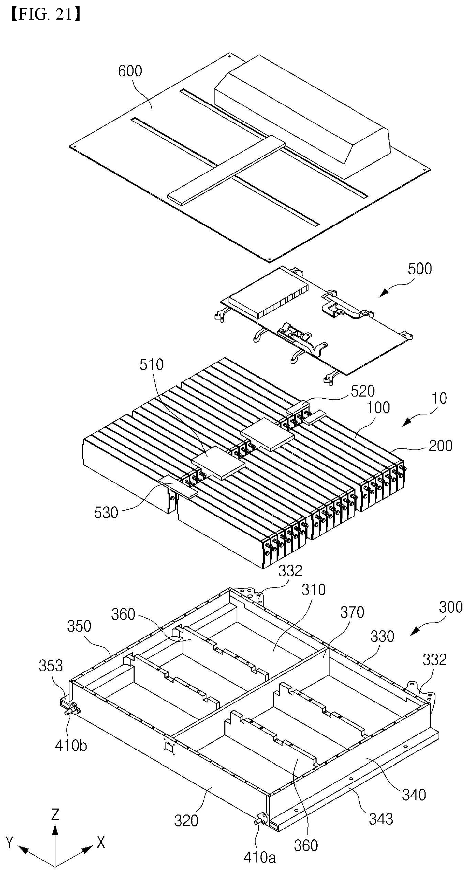

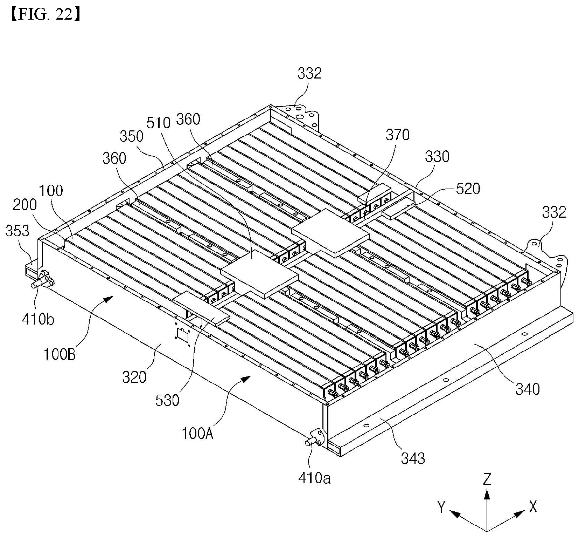

FIG. 20 is a schematic perspective view of a battery pack 1 according to one aspect of the present disclosure, FIG. 21 is an exploded perspective view schematically illustrating the configuration of the battery pack 1 of FIG. 20, and FIG. 22 is an exploded perspective view illustrating the battery cells 100 of FIG. 21 seated in the pack housing.

Referring to FIGS. 20 to 22, a battery pack 1 according to one aspect of the present disclosure includes a plurality of battery cells 100, an electrical component assembly 500, a pack housing 300, and a pack cover 600.

The battery cells 100 are stacked in a first direction (e.g., along an X-axis direction), and cooling pads 200 may be interposed between the battery cells. In some aspects, the stack of battery cells 100 and the cooling pads 200 may be directly stored within the pack housing 300, rather than being stored within another frame. However, a person skilled in the art will understand that various modifications are possible with respect to how the battery cells 100 may be stored.

For example, a stack of the battery cells 100 and the cooling pads 200 may be stored within a module frame to form a battery module, and the battery module may be stored within the pack housing 300. The module frame may be configured in the form of a cuboidal box that wraps around the perimeter of the stacked body of the battery cells 100 and the cooling pads 200 such that the stacked body of the battery cells 100 and the cooling pads 200 may be held from the interior. The module frame may be made of a metal material having high mechanical rigidity so as to sufficiently protect the battery cells 100 from swelling and outside impact.

The electrical component assembly 500 may include a relay device, a current sensor, a fuse, a battery management system (BMS), a manual service disconnector (MSD), and the like. The relay device is a switching component that selectively opens and closes the charge and discharge paths through which current flows, and can stop the flow of charge and discharge current in the event of an abnormality in the battery pack 1. BMS refers to a battery management device that provides overall control of the charge and discharge behavior of the battery cells 100, and may be a component typically included in the battery pack 1. And MSD refers to a system for selectively disconnecting the power source of a high-voltage battery by physical means, such as disconnecting the service plug when necessary.

Such an electrical component assembly 500, along with the battery cells 100, may be packaged from exposure to the outside by a pack housing 300 and a pack cover 600.

The pack housing 300 may be a structure that provides an interior storage space for the battery cells 100 and the electrical component assembly 200 and is provided with brackets 332 or mounting structures 343, 353 for coupling to the body of a vehicle.

The pack housing 300 may be made of a highly rigid metal material, as it provides a mechanical supporting force to the battery modules 100 and the electrical component assembly 500 and serves to protect them from outside impacts and the like.

The pack housing 300 according to the present aspect may include a lower frame 310 provided in the form of a wide plate on which the battery cells 100 may be seated, a front frame 320, a rear frame 330, a right side frame 340, and a left side frame 350 that are vertically coupled along an edge perimeter of the lower frame 310 to form a wall. The pack housing 300 may further include a center beam 370 and a set of cross beams 360 to define a seating space for the battery cells 100. The center beam 370 may have its first end coupled to the front frame 320 and its second end coupled to the rear frame 330. In some aspects, the cross beam 360 may be coupled at its first end to the center beam 370 and at its other end to the right side frame 340 or the left side frame 350. In some aspects, the cross beam 360 may extend across the center beam 370 and may be coupled at one end to the right side frame 340 and at the other end to the left side frame 350.

In some aspects, the lower frame 310, the front frame 320, the rear frame 330, the right side frame 340, the left side frame 350, and the cross beam 360 may each be aluminum extruded structures, and the pack housing 300 may be formed by welding and/or bolt fastening the frames together.

For example, by fabricating the frames by extruding aluminum with a mixture of interior spaces and ribs, and welding the frames together to form the pack housing 300, the weight of the pack housing 300 may be reduced and the mechanical rigidity may be at or above a required level of reliability.

In some aspects, a heat sink may further be provided within the pack housing 300. The heat sink may be arranged in the form of a plate having a flow path in its interior to absorb and dissipate heat from another object by thermal contact. In some aspects, the lower frame 310 may include an inlet port 410a through which coolant may flow in, an outlet port 410b through which coolant may flow out, and a cooling channel through which coolant may flow.

The battery cells 100 may be electrically connected by interbusbars 510, 520, 530. The interbusbars may include a first interbusbar 510 electrically connecting battery modules 100 disposed 2x2 along a first direction (e.g., along an X-axis direction) and a second direction (e.g., along a Y-axis direction). In some aspects, the first interbusbar 510 may be provided at an intersection of the center beam 370 and the cross beam 360.

Additionally, the interbusbars may include a second interbusbar 520 for electrically connecting electrically connected battery cells 100 to an external load or charging system. The second interbusbar 520 need not be directly connected to the external load or charging system, and may be connected to the external load or charging system via the electrical component assembly 500.

The battery modules 100 may include a first group of battery cells 100A positioned on one side with respect to the center beam 370 and a second group of battery cells 100B positioned on the other side. The interbusbars may include a third interbusbar 530 electrically connecting the first group of battery cells 100A and the second group of battery cells 100B.

As above, although aspects of the present disclosure have been described in detail, a person of ordinary skill in the art to which the present disclosure belongs will be able to implement the present disclosure in various modifications without departing from the spirit and scope of the present disclosure as defined in the appended claims. Therefore, further modifications of aspects of the present disclosure will not depart from the technology of the present disclosure.

### [Description of Reference Numerals]

1: battery pack
100: secondary battery
110: stack-type electrode assembly
111: unit battery
116: electrode lead
120, 120a, 120b: MTB
122: MTB housing
122h: through-hole
122p: fused resin layer
122pe: extension part
122pp: protrusion part
124: electrode terminal part
125: busbar
128: check valve
130: laminate sheet
130e: edge part
130m: combination part
130t: end part
132: inner resin layer
134: metal layer
136: outer resin layer

## Claims

1. A secondary battery, comprising:
a stack-type electrode assembly in which a plurality of unit batteries is stacked in a first direction, the stack-type electrode assembly having electrode leads at each end thereof in a second direction perpendicular to the first direction;
a multifunctional terminal block included at each end of the stack-type electrode assembly; and
a laminate sheet surrounding side surfaces of the stack-type electrode assembly,
wherein the multifunctional terminal block comprises a fused resin layer on a side surface thereof, the fused resin layer having a locally increased thickness.

2. The secondary battery of claim 1, wherein a combination part of the laminate sheet is positioned at a location where the fused resin layer has the locally increased thickness.

3. The secondary battery of claim 2, wherein the fused resin layer is a polymer film, and wherein the location where the fused resin layer has the locally increased thickness has a greater thickness due to a greater number of coatings of the polymer film compared to other locations of the fused rein layer.

4. The secondary battery of claim 2, wherein the fused resin layer comprises an extension part extending along the side surface of the multifunctional terminal block from an edge of the laminate sheet.

5. The secondary battery of claim 4, wherein a thickness of the fused resin layer at the location having the locally increased thickness in the extension part ranges from 1.8 times to 2.2 times a thickness of the fused resin layer at other locations in the extension part.

6. The secondary battery of claim 2, wherein the combination part is located in a center part of the secondary battery in the first direction.

7. The secondary battery of claim 2, wherein the fused resin layer is a polymer ring fused to a perimeter of a multifunctional terminal block housing of the multifunctional terminal block, and
wherein the location where the fused resin layer has the locally increased thickness is a portion where tension is configured to be applied to the polymer ring when the polymer ring is fused to the perimeter of the multifunctional terminal block housing.

8. The secondary battery of claim 7, wherein the fused resin layer extends at least partially between the combination part.

9. The secondary battery of claim 8, wherein a length of the fused resin layer extending between the combination part ranges from 0.1 mm to 2 mm.

10. A method of manufacturing a secondary battery, comprising:
coupling a multifunctional terminal block to each end of a stack-type electrode assembly, the stack-type electrode assembly including a plurality of unit batteries stacked in a first direction and having electrode leads at each end in a second direction perpendicular to the first direction;
forming a fused resin layer on a perimeter of a multifunctional terminal block housing of the multifunctional terminal block; and
bonding a laminate sheet to the fused resin layer so as to surround side surfaces of the stack-type electrode assembly,
wherein the fused resin layer has a locally increased thickness, and
wherein the laminate sheet has a combination part at a location where the fused resin layer has the locally increased thickness.

11. The method of claim 10, wherein the step of forming the fused resin layer comprises locally forming an overlapping layer of polymer films.

12. The method of claim 11, wherein the polymer film is configured to surround a side surface of the multifunctional terminal block housing and overlap locally.

13. The method of claim 10, wherein the step of forming the fused resin layer comprises:
providing a polymer ring having an inner length longer than a length of an outer circumferential surface of the multifunctional terminal block housing on the perimeter of the multifunctional terminal block housing;
fusing the polymer ring on a side surface of the multifunctional terminal block housing from one side of the multifunctional terminal block housing; and
mutually fusing a remaining length of the polymer ring.

14. The method of claim 13, wherein a location where the polymer ring is mutually fused in the step of mutually fusing the remaining length of the polymer ring coincides with the location where the laminate sheet has the combination part.

15. The method of claim 10, wherein an electrode terminal part electrically connected to the electrode leads of the stack-type electrode assembly and a busbar electrically connected the electrode leads of the stack-type electrode assembly and the electrode terminal part are included in the multifunctional terminal block housing, and
wherein the laminate sheet, comprises:
a metal layer having flexibility;
an inner resin layer located on a first side of the metal layer; and
an outer resin layer located on a second side of the metal layer, and
wherein the inner resin layer comprises casted polypropylene (CPP).
